# FASCICULE DE BREVET EUROPEEN

(11) **EP 2 818 364 B1**
(45) Date de publication et mention de la délivrance du brevet: **30.08.2017**
(21) Numéro de dépôt: 13305887.5
(22) Date de dépôt: 26.06.2013
(51) Int. Cl.: B60R 7/04, B60R 5/04

(54) **Rideaux à lamelles**
Lamellenvorhänge
Strip curtains

(43) Date de publication de la demande: 31.12.2014
(73) Titulaire: EUROSTYLE SYSTEMS, 36000 Châteauroux (FR)
(72) Inventeur: Harnay, Nicolas, 36330 Le poinconnet (FR); Fraudet, Sebastien, 36330 Le Poinconnet (FR)
(74) Mandataire: Thinat, Michel

(56) Documents cités:
- EP-A1- 1 690 740
- WO-A1-2011/143467
- DE-U1-202004 006 649

## Description

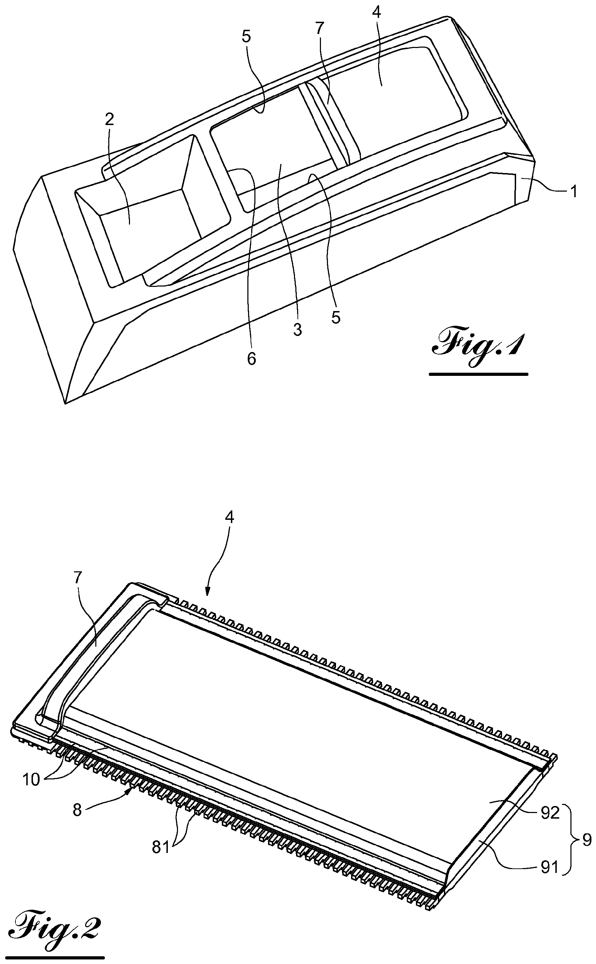

L'invention concerne un procédé de réalisation d'un rideau à lamelles conformément à la revendication 1 et un rideau à lamelles conformément à la revendication 3. WO2011/143467A divulgue un tel procédé et un rideau à lamelles conformément aux préambules des revendications 1 et 3. Dans la plupart des cas, les rideaux à lamelles sont utilisés pour occulter une zone de rangement tel que, par exemple, un compartiment dans une console ou dans une porte latérale d'un véhicule automobile (voir figure 1). Afin de pouvoir être déplacé facilement pour respectivement ouvrir ou fermer la zone de rangement, le rideau est réalisé avec deux matières plastiques surmoulées, à savoir une première matière, rigide, assurant le guidage et la tenue géométrique du rideau et une seconde matière, souple, permettant la cohésion des lamelles entre elles et ayant en raison de cela une faible épaisseur. Des rideaux de ce genre ne présentent aucun confort en raison de cette conception simple et les matériaux utilisés.

Le but de l'invention est de proposer un type de rideau à lamelles ayant la fonction d'occultation et une fonction de confort.

Le but de l'invention est atteint avec un rideau à lamelles conformément à la revendication 3. Ce rideau peut avoir l'une au moins des caractéristiques supplémentaires suivantes :
- au moins une partie des lamelles sont liées entre elles par des zones de matière fine et souple ;
- les lamelles sont liées entre elles par deux ou par trois par des zones de matière fine et souple ;
- le revêtement est fixé sur le support par des coutures piquées parallèles à la direction prédéterminée de déplacement du rideau ;
- le rideau comprend un élément de préhension ;
- l'élément de préhension est rapporté au support par un moyen de fixation adapté tel que par clipsage, par vissage ou par soudure par ultra-son ;
- le rembourrage est issu d'un surmoulage de matière souple sous le revêtement ;
- le rembourrage est issu d'un collage de matière souple sous le revêtement.

Le but de l'invention est également atteint avec un procédé de réalisation d'un rideau à lamelles conformément à la revendication 1. D'autres caractéristiques et avantages de la présente invention ressortiront de la description ci-après d'un mode de réalisation de l'invention. La description est faite en référence aux dessins annexés dont
- la figure 1 représente une console centrale pour un véhicule automobile avec un compartiment pourvu d'un rideau selon l'invention,
- la figure 2 représente le rideau seul du côté revêtement,
- la figure 3 représente le support du rideau de l'invention,
- la figure 4 représente le rideau de l'invention du côté du revêtement en état semi-fini,
- la figure 5 représente une coupe transversale partielle du rideau de l'invention et,
- les figures 6A à 8B représentent des coupes partielles d'un rideau de l'invention selon différents modes de réalisation.

La figure 1 représente au titre d'un exemple pour une application du rideau de l'invention, une console centrale pour un véhicule automobile avec deux compartiments dont un, référencé 2, reste ouvert en permanence et dont l'autre, référencé 3, est pourvu d'un rideau permettant de l'occulter à volonté. Le rideau 4 est représenté en une position intermédiaire occultant ainsi le compartiment 3 partiellement. Afin de pouvoir déplacer le rideau 4 aisément entre l'état de fermeture complète et l'état d'ouverture complète du compartiment et afin de pouvoir le ranger sans besoin de place supplémentaire lorsqu'il est en état d'ouverture complète du compartiment 3, le rideau coulisse dans des rails 5 agencés de part et d'autre des bords supérieurs longitudinaux du compartiment 3. Avantageusement, le compartiment 3 comprend en outre un rail transversal 6 dans lequel s'engage le rideau 4 lorsque le compartiment 3 est entièrement fermé. Pour la manipulation du rideau 4, celui-ci est pourvu d'une poignée 7 qui peut être en même temps une pièce décorative rapportée au rideau.

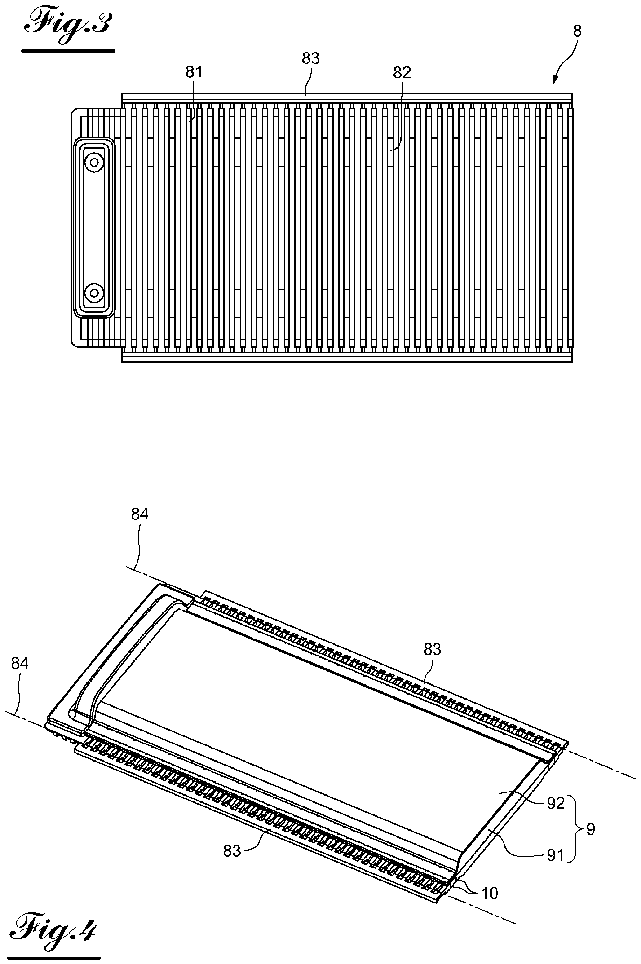

La figure 2 représente le rideau 4 seul en une vue en perspective avec vue sur le côté supérieur, donc sur le côté visible lorsque le rideau est monté dans la console 1. On voit sur cette figure 2 que le rideau est constitué de trois éléments distinctes : un support 8 obtenu par injection, un complexe 9 formé par une couche de mousse 91 et une feuille de revêtement 92 et la poignée de préhension 7 qui sera généralement une pièce rapportée car obtenue par injection dans une autre matière que le support, notamment pour pouvoir lui donner un aspect enjoliveur. Le support 8 est, comme on voit d'avantage clairement sur la figure 3, formé par un ensemble de lamelles 81 rigides pour assurer la fonction d'élément de guidage. Les lamelles 81 sont reliées entre elles, de préférence par deux ou par trois, par des zones 82 de matière fine et souple afin de permettre au rideau 4 de suivre la courbure des rails 5 définie par la forme générale de la zone de rangement à occulter. Le choix d'une liaison par deux ou par trois des lamelles entre elles dépend notamment du rayon de courbure des rails 5 que le rideau 4 doit prendre durant son déplacement.

Afin de pouvoir assurer la fonction de guidage sans que le déplacement du rideau ne soit gêné par le revêtement 92, les extrémités des lamelles 81 dépassent du revêtement de part et d'autre de celui-ci.

Comme cela est représenté plus particulièrement sur les figures 3 à 5, le support 8 du rideau 4 est pourvu, le temps que le rideau 4 n'est pas entièrement fini, de barrettes latérales 83 reliant, respectivement d'un côté et de l'autre du support, les extrémités des lamelles 81 entre elles. Cette disposition de l'invention permet d'obtenir le support 8 en une seule pièce par injection. De plus, cette disposition facilite l'assemblage du support 8 avec le complexe revêtement/mousse 9 par des coutures latérales 10 dans la mesure où les barrettes latérales 83 assurent un espacement régulier des lamelles 81 entre elles.

Le complexe revêtement/mousse 9 est issu de l'assemblage des deux matériaux entre eux, à savoir d'une mousse 91 d'épaisseur et de densité variable en fonction du confort recherché et d'une feuille de revêtement 92 d'un textile, d'une matière thermoplastique ou par exemple de cuir véritable ou de cuir synthétique suivant l'aspect final désiré. Le complexe 9 est obtenu par collage d'une couche 91 de mousse sous la feuille de revêtement 92 ou par surmoulage d'une mousse thermoplastique sous le revêtement 92. Dans un cas comme dans l'autre, le complexe 9 peut être réalisé directement avec la forme finale de la zone de confort.

La poignée de préhension 7 sera généralement une pièce rapportée sur le support rigide 8 par des moyens de fixation adaptés tels que, par exemple, clipsage, vissage ou soudure par ultrason. Il est cependant également envisageable de former une poignée 7 dans la masse avec le support 8 lorsque l'aspect décoratif de la poignée est sans importance pour le type de console auquel le rideau 4 est destiné.

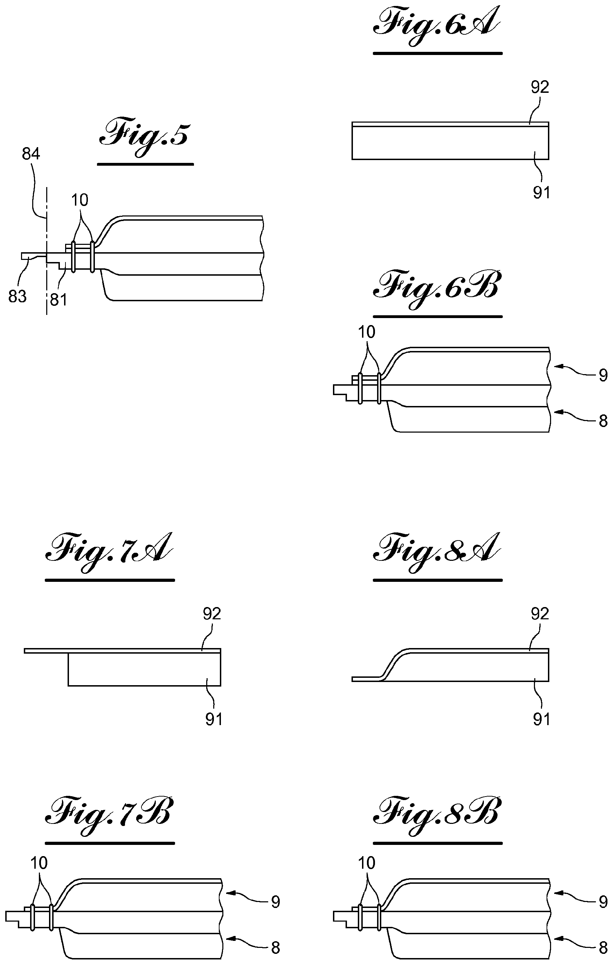

Comme cela est visible sur les figures 2 et 4 et encore plus clairement sur les figures 5 à 8, le complexe 9 est fixé sur le support 8 par des coutures latérales 10. Dans les exemples représentés, le complexe 9 est fixé sur le support 8 par des coutures latérales doubles. Cependant, il est également concevable, notamment dans la réalisation selon la figure 8, c'est-à-dire lorsque le revêtement déborde d'une couche de mousse formée, de fixer le complexe 9 sur le support 8 avec des coutures simples. L'opération de couture s'effectue le temps que le support 8 est encore pourvu de ses barrettes latérales 83. Cette disposition permet de garantir une couture de piquage régulière et avec chaque piquage effectué dans un espace entre deux lamelles 81 avoisinantes.

Après couture, les barrettes 83 sont retirées du support 8 par découpe, ce qui donne au rideau 4 toute la souplesse nécessaire pour que celui-ci puisse suivre la forme imposée par la cinématique d'ouverture et de fermeture du rideau 4 lorsqu'il est installé dans la console 1.

La figure 5 représente une coupe transversale d'un côté du rideau 4 et montre le support 8 avec une lamelle 81 et une barrette 83 et la ligne de sectionnement 84.

Comme cela est également visible sur la figure 5, le complexe 9 du revêtement/mousse est fixé sur le support 8 de chaque côté du rideau par deux coutures 10.

La fixation du complexe 9 sur le support 8 par des coutures doubles est plus particulièrement utile dans les cas où le revêtement 92 écrase les bords latéraux de la couche de mousse 91. En effet, comme cela est visible sur la figure 6, la fixation du complexe 9 sur le support 8 par des coutures doubles est plus particulièrement utile lorsque la couche de mousse 91 a la même largeur que le revêtement 92. Ceci est généralement le cas lorsque la mousse est collée sur le revêtement. Dans cette configuration, le revêtement ne déborde pas de la mousse et, en conséquence, comme cela se voit sur la partie b de la figure 6, la mousse est écrasée lors de la couture du complexe 9 sur le support 8. Dans ce cas, avec une couture simple, les bords du revêtement 92 risquent de ne pas rester entièrement plat sur le support 8 et, de cette manière, de gêner le mouvement du rideau lors d'une ouverture ou fermeture du compartiment 3. En conséquence, une couture double s'impose afin de garantir un bord latéral plat du complexe 9.

Une couture double est également recommandée dans la configuration représentée sur la figure 7, c'est-à-dire lorsque la mousse collée sous le revêtement 92 est moins large que le revêtement 12. Dans cette situation, le revêtement doit écraser le bord latéral de la mousse 91 lorsque le complexe 9 est cousu suivant le support 8. Dans ce cas, comme d'ailleurs aussi dans celui représenté sur la figure 6, la couture la plus proche de la mousse sert essentiellement à fixer le complexe mousse revêtement sur le support alors que la couture extérieure sert plutôt à garder le bord du revêtement 92 à plat sur le support 8.

La configuration représentée sur la figure 8 est celle d'une mousse surmoulée sur le revêtement 92. Selon cette configuration, la mousse et le revêtement ont la forme définitive et une couture simple 10 pourrait suffire de chaque côté du rideau. Toutefois, pour s'assurer que le bord du revêtement 92 soit maintenu plat sur le support 8, une seconde couture 10 peut être indiquée.

## Revendications

1. Procédé de réalisation d'un rideau (4) pour occulter un compartiment d'un véhicule automobile par coulissement du rideau (4) entre un état d'ouverture et un état de fermeture du compartiment, le rideau (4) comportant des lamelles (81), comprenant les étapes
de réaliser un support (8) comportant les lamelles (81) disposées parallèlement les unes par rapport aux autres et transversalement par rapport à la direction de coulissement du rideau (4) et deux barrettes (83) latérales s'étendant dans le sens du coulissement du rideau (4) et reliant les extrémités libres des lamelles (81), respectivement d'un côté et de l'autre du support (8), entre elles le temps que le rideau (4) n'est pas entièrement fini,
d'assembler un complexe de revêtement (9) sur le support (8), et
de retirer les barrettes (83), après la fixation des lamelles (81) sur le complexe (9), par découpe,
**caractérisé par** l'étape de l'assemblage du support (8) sur le complexe (9) par des coutures latérales de piquage (10) qui s'étendent dans le sens du coulissement du rideau (4), à une distance prédéterminée, respectivement de l'une et de l'autre des deux barrettes (83), avec chaque piquage effectué dans l'espace entre deux lamelles avoisinantes (81), de façon que les lamelles (81) soient maintenues en place seulement par le complexe (9) et les coutures latérales (10).

2. Procédé selon la revendication 1, **caractérisé en ce que**, lors de l'étape de fixer les lamelles (81) sur le complexe (9), deux coutures (10) sont effectuées de chaque côté de l'ensemble de lamelles (81).

3. Rideau (4) pour occulter un compartiment (3) d'un véhicule automobile par coulissement du rideau (4) entre un état d'ouverture et un état de fermeture du compartiment (3), le rideau (4) comprenant
une pluralité de lamelles (81) disposées parallèlement les unes par rapport aux autres et transversalement par rapport à la direction de coulissement du rideau (4),
des moyens de maintien des lamelles (81) les unes par rapport aux autres, et
un complexe (9) comportant un revêtement (92) des lamelles (81),
**caractérisé en ce qu'**il comprend au moins deux coutures (10) s'étendant chacune le long d'un bord longitudinal du rideau et fixant les extrémités des lamelles (81) au complexe (9), le complexe (9) et les coutures latérales (10) constituant les moyens de maintien en place des lamelles (81).

4. Rideau à lamelles selon la revendication 3, **caractérisé en ce que** certaines lamelles (81) adjacentes sont liées entre elles en outre par des zones (82) de matière fine et souple.

5. Rideau à lamelles selon la revendication 4, **caractérisé en ce que** les lamelles (81) sont liées entre elles par deux ou par trois par les zones (82) de matière fine et souple.

6. Rideau à lamelles selon l'une quelconque des revendications 3 à 5, **caractérisé en ce qu'**il comprend un élément de préhension (7).

7. Rideau à lamelles selon la revendication 6, **caractérisé en ce que** l'élément de préhension (7) est rapporté au support (8) par un moyen de fixation adapté tel que par clipsage, par vissage ou par soudure par ultra-son.

8. Rideau à lamelles selon l'une quelconque des revendications 3 à 7, **caractérisé en ce que** le complexe (9) comprend un rembourrage (91) issu d'un surmoulage de matière souple sous le revêtement (92).

9. Rideau à lamelles selon l'une quelconque des revendications 3 à 7, **caractérisé en ce que** le complexe (9) comprend un rembourrage (91) issu d'un collage de matière souple sous le revêtement (92).

## Patentansprüche

1. Verfahren zur Herstellung eines Vorhangs (4) zur Verdunkelung eines Abteils eines Kraftfahrzeugs durch Gleiten des Vorhangs (4) zwischen einem geöffneten Zustand und einem geschlossenen Zustand des Abteils, wobei der Vorhang (4) Lamellen (81) aufweist, das die folgenden Schritte besitzt:
Herstellen eines Trägers (8), aufweisend die Lamellen (81), die parallel zueinander und transversal in Bezug zur Gleitrichtung des Vorhangs (4) angeordnet sind, und zwei seitliche Stäbe (83), die sich in Gleitrichtung des Vorhangs (4) erstrecken und die freien Enden der Lamellen (81) jeweils auf der einen und der anderen Seite des Trägers (8) während der Zeit, in der der Vorhang (4) nicht vollständig fertig ist, verbinden,
Aufbringen eines Verkleidungskomplexes (9) auf den Träger (8), und
Entfernen der Stäbe (83) nach Befestigen der Lamellen (81) auf dem Komplex (9) durch Schneiden,
**gekennzeichnet durch** den Schritt des Aufbringens des Trägers (8) auf den Komplex (9) mittels seitlicher Steppnähte (10), die sich in Gleitrichtung des Vorhangs (4) erstrecken, in einem vorbestimmten Abstand jeweils von dem einen und dem anderen der zwei Stäbe (83), wobei jede Steppung, durchgeführt wird im Raum zwischen zwei benachbarten Lamellen (81) derart, dass die Lamellen (81) nur von dem Komplex (9) und den seitlichen Nähten (10) am Platz gehalten werden.

2. Verfahren nach Anspruch 1, **dadurch gekennzeichnet, dass** beim Schritt des Befestigens der Lamellen (81) auf dem Komplex (9) auf jeder Seite der gesamten Lamellen (81) zwei Nähte (10) durchgeführt werden.

3. Vorhang (4) zur Verdunkelung eines Abteils (3) eines Kraftfahrzeugs durch Gleiten des Vorhangs (4) zwischen einem geöffneten Zustand und einem geschlossenen Zustand des Abteils (3), wobei der Vorhang (4) umfasst
eine Vielzahl von Lamellen (81), die parallel zueinander und transversal in Bezug zur Gleitrichtung des Vorhangs (4) angeordnet sind,
Haltemittel der Lamellen (81) zueinander,
einen Komplex (9), aufweisend eine Verkleidung (92) der Lamellen (81),
**dadurch gekennzeichnet, dass** er mindestens zwei Nähte (10) umfasst, die sich jeweils entlang eines Längsrandes des Vorhangs befinden und die Enden der Lamellen (81) am Komplex (9) befestigen, wobei der Komplex (9) und die seitlichen Nähte (10) die Haltemittel der Lamellen (81) darstellen.

4. Lamellenvorhang nach Anspruch 3, **dadurch gekennzeichnet, dass** einige benachbarte Lamellen (81) untereinander ferner mittels Zonen (82) aus dünnem und geschmeidigem Material verbunden sind.

5. Lamellenvorhang nach Anspruch 4, **dadurch gekennzeichnet, dass** die Lamellen (81) untereinander zu zweit oder zu dritt mittels Zonen (82) aus dünnem und geschmeidigem Material verbunden sind.

6. Lamellenvorhang nach einem der Ansprüche 3 bis 5, **dadurch gekennzeichnet, dass** er ein Greifelement (7) umfasst.

7. Lamellenvorhang nach Anspruch 6, **dadurch gekennzeichnet, dass** das Greifelement (7) auf dem Träger (8) mittels eines geeigneten Befestigungsmittels wie Klipsen, Schrauben oder Ultraschallschweißen angebracht ist.

8. Lamellenvorhang nach einem der Ansprüche 3 bis 7, **dadurch gekennzeichnet, dass** der Komplex (9) eine Polsterung (91) umfasst, die aus einem Überformen von elastischem Material unter der Verkleidung (92) hervorgegangen ist.

9. Lamellenvorhang nach einem der Ansprüche 3 bis 7, **dadurch gekennzeichnet, dass** der Komplex (9) eine Polsterung (91) umfasst, die durch Kleben von elastischem Material unter der Verkleidung (92) hervorgegangen ist.

## Claims

1. A method for producing curtains (4) to conceal a compartment of a motor vehicle by sliding the curtain (4) between an open state and a closed state of the compartment, the curtain (4) including strips (81), comprising the following steps:
producing a support (8) including the strips (81) positioned parallel to one another and transverse to the sliding direction of the curtain (4) and two lateral bars (83) extending in the direction of the sliding of the curtain (4) connecting the free ends of the strips (81), on both sides, respectively, of the support (8), to one another as long as the curtain (4) is not completely finished,
assembling a coating complex (9) on the support (8), and
removing the bars (83), after fastening the strips (81) on the complex (9), by cutout,
**characterized by** the step of assembling the support (8) on the complex (9) by lateral stitched seams (10) that extend in the direction of the sliding of the curtain (4), at a predetermined distance, respectively, from both of the bars (83), with each stitch made in the space between two adjacent strips (81), such that the strips (81) are kept in place only by the complex (9) and the lateral seams (10).

2. The method according to claim 1, **characterized in that**, during the step of fastening the strips (81) on the complex (9), two seams (10) are made on each side of the set of strips (81).

3. A curtain (4) for concealing a compartment of a motor vehicle by sliding the curtain (4) between an open state and a closed state of the compartment (3), the curtain (4) comprising:
a plurality of strips (81) positioned parallel to one another and transverse to the sliding direction of the curtain (4),
means for maintaining the strips (81) relative to one another, and
a complex (9) including a coating (92) of the strips (81),
**characterized in that** it includes at least two seams (10) each extending along a longitudinal edge of the curtain and fastening the ends of the strips (81) to the complex (9), the complex (9) and the lateral seams (10) constituting the means for keeping the strips (81) in place.

4. The strip curtain according to claim 3, **characterized in that** certain adjacent strips (81) are further connected to one another by zones (82) of fine and flexible material.

5. The strip curtain according to claim 4, **characterized in that** the strips (81) are connected to one another by twos or threes by the zones (82) of fine and flexible material.

6. The strip curtain according to any one of claims 3 to 5, **characterized in that** it comprises a gripping element (7).

7. The strip curtain according to claim 6, **characterized in that** the gripping element (7) is attached to the support (8) by appropriate fastening means such as by clipping, screwing or ultrasonic welding.

8. The strip curtain according to any one of claims 3 to 7, **characterized in that** the complex (9) comprises padding (91) resulting from overmolding flexible material below the coating (92).

9. The strip curtain according to any one of claims 3 to 7, **characterized in that** the complex (9) comprises padding (91) resulting from gluing flexible material below the coating (92).
